Europäisches Patentamt

European Patent Office

Office européen des brevets

(11) Publication number: **0 204 276**
**B1**

# EUROPEAN PATENT SPECIFICATION

(45) Date of publication of patent specification: 24.05.89

(51) Int. Cl.⁴: **F 01 L 3/04, F 02 F 7/00**

(21) Application number: **86107386.4**

(22) Date of filing: **30.05.86**

(54) Components for engines and production therefor.

(30) Priority: **30.05.85 JP 115383/85**

(43) Date of publication of application:
**10.12.86 Bulletin 86/50**

(45) Publication of the grant of the patent:
**24.05.89 Bulletin 89/21**

(84) Designated Contracting States:
**CH DE FR GB LI SE**

(56) References cited:
**EP-A-0 051 300**
**EP-A-0 111 989**

(73) Proprietor: **NIPPON KOKAN KABUSHIKI KAISHA**
**1-2 Marunouchi 1-chome Chiyoda-ku Tokyo 100 (JP)**

(72) Inventor: **Yamada, Takemi**
**No. 20-6, Todoroki, 4-chome**
**Setagaya-ku Tokyo (JP)**
Inventor: **Sekiguchi, Hideo**
**No. 7-3, Chigusadai Midori-ku**
**Yokohama-shi Kanagawa-ken (JP)**
Inventor: **Okamoto, Hiromi**
**No. 18-601, Wakabadai, 2-chome Asahi-ku**
**Yokohama-shi Kanagawa-ken (JP)**
Inventor: **Azuma, Shozo**
**No. 15-7, Megurohoncho, 6-chome**
**Meguro-ku Tokyo (JP)**
Inventor: **Kitamura, Akira**
**No. 363, Tokiwadai Hodogaya-ku**
**Yokohama-shi Kanagawa-ken (JP)**

(74) Representative: **Klingseisen, Franz, Dipl.-Ing. et al**
**Patentanwälte Dr. F. Zumstein Dr. E. Assmann**
**Dipl.-Ing. F. Klingseisen Bräuhausstrasse 4**
**D-8000 München 2 (DE)**

Courier Press, Leamington Spa, England.

## Description

The invention relates to components for engines according to the preamble of claim 1.

EP—A—0 111 989 discloses an engine part in the form of a piston which comprises a ceramic member and a metallic member. To achieve a structure in which thermal stresses in the ceramic member are within desired limits, the ceramics member mas a metallized layer formed on one surface and a metallic buffer is bonded to the metallized layer so as to be disposed between the ceramics member and the metallic member. Preferably the coefficient of thermal expansion of the buffer is equivalent to, or smaller than, that of the ceramics material.

Exhaust valves of Diesel engines in marine vessels are easily caused with burn-out damage by exhausted gas. Degree of the damage is remarkable, especially in the Diesel engines of middle speed which exhaust the gas of relatively high temperatures, or when heavy fuel oil is used. Such a problem about the damage is typical in the burn-out on the face of the exhaust valve.

As countermeasures to the burn-out, the prior art has conventionally used exhaust valves which were, at the face, welded with deposit of corrosion resistant alloys having high hardness but satisfied results were not obtained.

When this kind of the exhaust valves are employed in the Diesel engines of ships and other vehicles, intervals between overhauls are around 1500 hr only.

Under these circumstances, the inventors proposed exhaust valves coated with ceramic layer at the face (EP—A—0 051 300; US—A—4,530,322, 4,554,897, 4,554,898 and 4,556,022). The ceramic-coated exhaust valve has considerably lengthened the interval between the overhauls, but it is at most around 6000 hr, and it could not satisfy users' require of dock-to-dock maintenance free (more than 12000 hr).

According to the inventors; studies, since the ceramic-coated exhaust valve largely lengthened the overhaul interval than the conventional exhaust valve, and if sintered ceramic materials were used as components for the face, it would be supposed that the burn-out resistance will be more improved and the overhaul interval will be more extended.

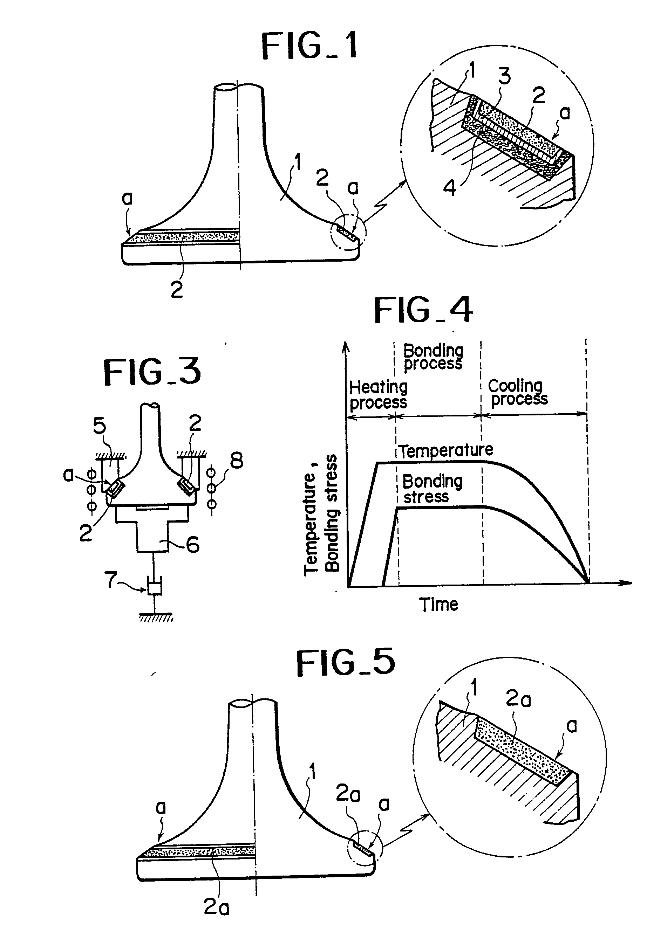

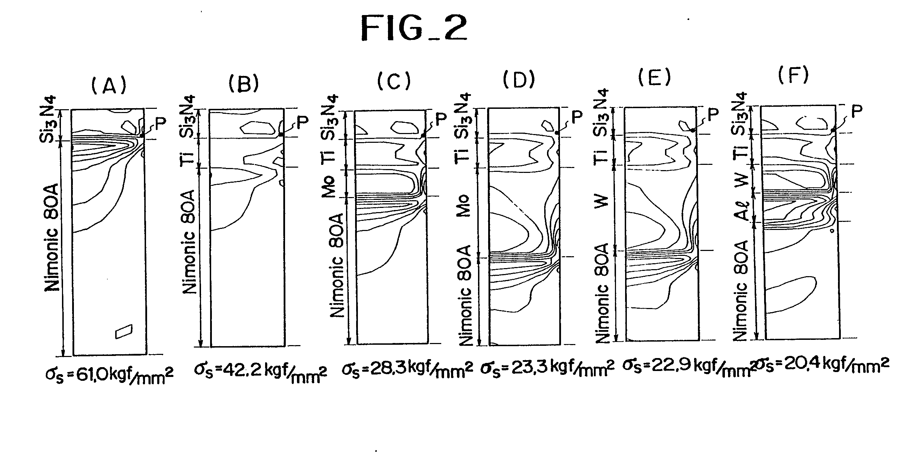

Fig. 5 shows a conventional structure where sintered ceramic materials 2a are buried in the face (a) of the exhaust valve and following manners are for joining the sintered ceramics 2 to a base material 1.

1) Mechanical fitting,
2) By bond agent,
3) Utilizing of metallizing or brazing, and
4) Diffusion bonding.

In the above (1) and (2), since the exhaust valve is used at higher temperatures (more than 600°C), their applications are difficult. In the above (3), since brazing is often used, strength at joined parts is low with poor reliability. In the above (4), since the bonding can be made at lower temperatures and the bonding strength is high, this manner is favorable, however, in the bonding, a thermal expansion mismatch exists between ceramics and a base material, and a serious problem arises, causing cracks in a sintered ceramics due to thermal stress during cooling after bonding. In addition, the exhaust valve during operation is repeatedly effected with variances in temperatures [around 900°C $\rightleftharpoons$ around 300°C]. Since thermal stress is generated in company with said repeated variance of temperature, the sintered ceramics of low deforming ability is brought about with fatigue-damage.

In view of these conventional problems, the object of the invention is to provide structures where the ceramic material is not cracked by the thermal stress during cooling or by the repeated thermal stress, and a method which is suited to processing of such structures. This object is achieved by the features in the characterizing part of claim 1.

This invention has a fundamental characteristic that a base material of the exhaust valve is laminated with a sintered ceramic material, an insert metal and an insert material. The sintered ceramic material is to form a face part of the exhaust valves. The insert metal comprises an active metal and is to bond the sintered ceramics and the insert materials. The insert material is to moderate thermal expansion and composed mainly of a low thermal expansion material.

The present structure is interposed with two kinds of the above mentioned insert substances which are different in serving functions between the base material and the sintered ceramics. The insert material is a low thermal expansion material between the base material and the sintered ceramics, and therefore generation of the thermal stress is moderated during cooling after the bonding, and the sintered ceramics has high bonding strength to a substractured material, and is as a whole difficult to be cracked, so that it is possible to produce structures of the exhaust valve by excellent bonding strength.

The invention may have embodiments as follows:—

A) A structure, where the insert material is composed of a low thermal expansion material only;

B) A structure, where the insert material comprises a plurality of layers including the low thermal expansion material and a soft metal;

C) A structure, where the low thermal expansion material is composed of one or both of the ceramics and the low thermal expansion metal having thermal expansion coefficient of not more than $0.8 \times 10^{-6}/°C$;

D) A structure, where the insert material includes a bonding metal comprising an active metal in an intermediate layer of this insert material; and

E) A structure, where each of the insert material and the insert metal wraps another material in an upper layer but does not wrap its surface.

In addition, the invention has another basic characteristic as methods suited to processing of components for engines, as follows.

a) A method, where the base material is laminated with the insert material, the insert metal and the sintered ceramics in order from the lower layer, and is heated in a vacuum or an inert gas atmosphere, while a load is applied from the upper part of the sintered ceramics, whereby the laminated substances are provided with diffusion bonding therebetween; and

b) A method, where the lamination of bonding the insert material, the insert metal and the sintered ceramics on the base material is carried out by heating a part or a whole of the insert material and the insert metal under load on the lower surface of the sintered ceramics in the vacuum or the inert gas atmosphere, whereby the both substances are provided with the diffusion bonding, and subsequently by, if the insert material remains, interposing this remaining material on the base material and laminating said bonded substances on the base material, heating the bonded substances in a vacuum or an inert gas atmosphere, while the load is applied from the upper part of the sintered ceramics, whereby the substances are provided with the diffusion bonding.

Brief description of the drawings

Fig. 1 is a half cross sectional view showing an embodiment when the invention is applied to an exhaust valve;

Fig. 2(A) to (F) show schematically structures of the exhaust valves where the face parts are bonded with the sintered ceramics, and distribution of the thermal stress, and (A) and (B) are comparing examples, and (C) to (F) are embodiments of the invention;

Fig. 3 is an explanatory view showing a practising condition of the invention;

Fig. 4 shows heating and loading patterns in the present method; and

Fig. 5 is a half cross sectional view showing an exhaust valve by applying the conventional proces.

Detailed description of the invention

Fig. 1 shows an example where the invention is applied to an exhaust valve (valve body) for a Diesel engine. A face (a) (seat face) of the exhaust valve is buried with the sintered ceramics 2. Between the base material 1 and the sintered ceramics 2, there are interposed the bonding insert metal 3 and the insert material 4. These member-to-member, and the members-to- the sintered ceramics-to-the base material are bonded by diffusion bonding.

The low thermal expansion material which is nearer, in the thermal expansion, to the sintered ceramics than the base material, is positioned between the base material 1 and the sintered ceramics 2, thereby to moderate the thermal stress acting on the sintered ceramics 2, and for this purpose the insert material 4 for moderating the thermal stress is disposed.

For the above mentioned reason, the insert material 4 is mainly a low thermal expansion material. As the low thermal expansion material, a low thermal expansion metal is used ordinarily, and the ceramics will be used together with this metal in substitution for the low thermal expansion metal.

The insert material 4 may be of course composed of the low thermal expansion material only. However, in general this kind of materials have relatively high elastic modulus and sometimes do not fully moderate the thermal stress due to thermal strain thereof.

For such a case, there may be produced an inert material of multi-layered structure where a soft metal is incorporated in the low thermal expansion material. Thus, the thermal stress is reduced appropriately.

Further, the insert material 4 may be incorporated with a bonding metal (insert metal comprising an active metal) equivalent to said bonding insert metal 3 other than said soft metal. The bonding insert metal 3 is positioned between, e.g., the low thermal expansion material in the upper layer and the soft metal in the lower layer so as to serve to firmly bond the both substances.

It is preferable for the low thermal expansion metal (insert metal) to employ such metals including alloys where the thermal expansion coefficient is not more than $0.8 \times 10^{-6}/°C$. If using a material which is, in the thermal expansion, nearer to the sintered ceramics 2 than the base material 1, the thermal stress of the sintered ceramics 2 may be exactly moderated. For the thermal expansion metal, are used Mo, Mo alloys, W, W alloys, Nb, Nb alloys, Ta, Ta alloys, and invar-kovar.

For the soft metal (insert metal), are used Al, Al alloys, Cu, Cu alloys, Au, Au alloys, Ag, Ag alloys, Pt and Pt alloys.

The bonding insert metal 3 is composed of the active metal and is for firmly bonding the sintered ceramics 2 to the lower material, i.e., said insert material 4. For the bonding insert metal 3, are used Ti, Ti alloys, Al, Al alloys, Cu, Cu alloys, Ag and Ag alloys.

The bonding insert metal 3 and the insert material 4 may be composed by associating one or more than two of the above mentioned substances.

For the sintered ceramics 2, are used SiC, $Si_3N_4$, $ZrO_2$, $ZrB_2$ and PSZ (partially stabilized zirconia).

It is preferable that the above insert substances 3, 4 between the base material 1 and the sintered ceramics 2 are arranged to wrap the upper substances, excepting the exposed parts as seen in Fig. 1, whereby the sintered ceramics 2 can be exactly prevented from the thermal stress.

3

The bonding insert metal 3 envelops the upper sintered ceramics 2 at the circumference of the latter, and similarly the lower insert material 4 envelops the bonding insert metal 3. Also, if the bonding insert metal 3 and the insert material 4 are composed of a plurality of substances, for example, if the insert material 4 is multi-layered of low thermal expansion material, the bonding insert metal and the soft metal, it is preferable that the lower one similarly envelops the upper one.

Fig. 2 relates to exhaust valves which are bonded with the sintered ceramics at the face thereof, and shows results of a thermal stress which acts on the sintered ceramics with respect to the examples of the invention and the comparing ones. (A) to (F) of the same show the face parts. $\sigma s$ shows the maximum principal stress (P point of the figures) which is caused in the sintered ceramics during cooling after having bonded the materials. In each of the structures, $Si_3N_4$ is used as the sintered ceramics, and Nimonic 80A is used as the base material.

(C) to (F) of the same are the examples of the invention, and each of them uses Ti for the bonding insert metal 3. (C) to (E) use the low thermal expansion metal (Mo or W) only for the insert material 4, and (F) uses the low thermal expansion metal (W) and the soft metal (Al) therefore.

(A) and (B) are the comparative examples. (A) has bonded the sintered ceramics directly to the base material. (B) has provided an insert material (Ti) only corresponding to the bonding insert metal of the invention.

In (A) and (B), the maximum principal stress $\sigma s$ is 61.0 Kgf/mm$^2$ and 42.2 Kgf/mm$^2$ respectively being larger than tensile strength (about 40 Kgf/mm$^2$) of $Si_3N_4$, and in such faces, the ceramics are generated with cracks. On the other hand, in (C) to (F) of the invention, $\sigma s$ is each less than 40 Kgf/mm$^2$, and the ceramics are not generated with cracks during cooling.

A further explanation will be made to a method of the invention. The components for engines as mentioned above are produced by providing the diffusion bonding between the sintered ceramics and the bonding insert metal and between the bonding insert metal and the base material 1, and supplying load on the diffusion bonding therebetween while heating in vacuum or inert gas atmosphere. The heating temperatures are normally about 600 to 1200°C where the composing members can keep solid conditions. The load is applied at the bonding stress of not more than 100 Kg/mm$^2$.

A first method of the invention is to bond the members at the same time. As is seen in Fig. 1, the base material 1 is defined with a concave for burying the sintered ceramics. In the surface of the base material within a concave, are laminated, in order from the lower layer, the insert material 4, the bonding insert metal 3 and the sintered ceramics 2, and they are effected with load and heating in vacuum or inert gas atmosphere for providing the diffusion bonding between the members.

Fig. 3 shows an example of the bonding manners, where 5, 6 are pressing tools, 7 is a pressing cylinder, 8 is a high frequency induction coil encircling a material to be processed (valve body), which effects an induction heating to the material under processing while the pressing cylinder 7 is actuated so that the face (a) is pressed to the upper surface of the sintered ceramics by means of the pressing tool 5.

One example of the producing conditions of the exhaust valve is as follows:—

| | |
|---|---|
| Atmosphere | Not more than $1\times10^{-3}$ torr |
| Temperatures | 850°C |
| Bonding stress | 10 Kgf/mm$^2$ |
| Face member: (sintered ceramics) | NS · $Si_3N_4$ |
| Bonding insert metal | Ti (0.02 mm) |
| Thermal moderating insert material | |
|     Low thermal expansion material | W (3.00 mm) |
|     Soft metal | Al (0.5 mm) |

Fig. 4 shows the heating and loading patterns in said producing condition.

A second method of the invention is to bond a part or a whole of the insert material to the sintered ceramics, and bond said bonded part or whole to the base material, that is, a two step bonding, so that the strength of the base material is avoided from its lowering due to the high temperature heating. Nimonic alloy is in general used as the base material of the exhaust valve, and is made via a solution treatment and an aging treatment. For bonding the sintered ceramics 2 in dependence upon the first method, a heating condition at relatively high temperatures is required for providing the diffusion bonding between the sintered ceramics 2 and the bonding insert metal 3. If such a high heating is made, a problem arises that the aging of the base material advances and becomes over-aged and the strength is lowered.

In the present method, the base material is, as mentioned above, bonded with the insert material, the bonding insert metal and the sintered ceramics by heating the part or the whole of the insert substances 3, 4, and subsequently by, if the insert material remains, interposing this remaining material on the base material and laminating said bonded materials on the base material, heating the bonded ones in the vacuum or the inert gas atmosphere while the load is applied whereby the substances are provided with the diffusion bonding therebetween.

Depending upon this method, when the bonded substances are bonded on the base material 1, all of the bondings between the materials can be metal-to-metal bondings, and therefore the heating is sufficient at the relatively low temperatures and the base material may be prevented from lowering of the strength.

EP 0 204 276 B1

The bonding insert material is bonded partially or wholly to the base material. Main embodiments thereof are assumed as that (1) the bonding insert metal 3 only is bonded; (2) the bonding insert metal 3 and the multi-layered insert material 4 are partially bonded; and (3) all of the bonding insert metal 3 and the insert material 4 are bonded. In the (2) process, if the insert material 4 is multi-layered of the low thermal expansion metal—bonding metal—soft metal, the sintered ceramics 2 is bonded with the insert metal 3 and, e.g., the low thermal expansion metal.

The above mentioned bonding depends upon the diffusion bonding, and since the ceramics and the metal are bonded, the bonding operation is carried out at the relatively high temperatures.

In the thus obtained bonded one of the sintered ceramics+the insert materials, if there remains a residual insert material which is not yet bonded (above mentioned (1) and (2)), the residual insert material is interposed on the base material and bonded to the base material 1 in the same process as (1). That is, the residual insert material is supported on the base material within the concave, and said bonded one is laminated thereon, and the diffusion bonding is provided between the materials by heating in the vacuum or the inert gas atmosphere and pressing from the upper part of the sintered ceramics 2.

When the metal is used to the low thermal expansion material in the above mentioned bonding operation, a satisfied bonding may be provided at the lower temperatures. Heating temperatures will be selected from a range lower than the temperature for bonding of the sintered ceramics and the insert material, thereby to prevent the base material from over-aging.

When the ceramic material is used as a low thermal expansion material which comprises the insert material for moderating the thermal stress, an attention should be paid to that said material does not compose the bonding surface when it is applied to the base material. For example, when the material is bonded to the sintered ceramics 2 together with the insert metal 3, a further metal (low thermal expansion metal, bonding metal and soft metal) is bonded to the material to its lower surface. When the insert material 4 including the material is bonded between the base material and a bonding material including the sintered ceramics 2, said further metal is in advance provided with the diffusion bonding to the upper and lower parts of said material.

An example of producing the exhausting valve by the 2 step process is as follows:—

(A) 1st step [bonding between sintered ceramics and insert metal]

| | |
|---|---|
| Atmosphere | Not more than $1 \times 10^{-3}$ torr |
| Temperature | 950°C |
| Bonding stress | 10 Kgf/mm$^2$ |
| Face (sintered ceramics) | NS $\cdot$ Si$_3$N$_4$ |
| Insert metal | Ti (0.02 mm) |

(B) 2nd step [bonding between bonded body by 1st step, remaining insert material 4 and base material]

| | |
|---|---|
| Atmosphere | Inert gas |
| Temperature | 750°C |
| Bonding stress | 5 Kgf/mm$^2$ |
| Bonded body | NS $\cdot$ Si$_3$N$_4$—Ti |
| Thermal stress moderating insert material | |
| Low thermal expansion metal | W (3.00 mm) |
| Bonding metal | Ti (0.02 mm) |
| Soft metal | Cu (0.5 mm) |
| Base material | Nimonic 80A |

The above mentioned methods can be undertaken by means of conventional apparatuses, for example, so-called HIP. Each of the insert substances are not only plates but grains and powders.

The present exhaust valve of the sintered ceramics may be exactly avoided from cracking in the face, and is imparted with excellent burn-out resistance in comparison with the conventional exhaust valve (having welded deposit of stellite to the base material of SUH).

Table shows comparison in maintenance interval of the exhaust valve for the Diesel engine by the invention (Nos. 1 to 4) and the conventional exhaust valve of the welding deposit (No. 5).

As is seen from Table, the exhaust valves of the invention provided with the sintered ceramics in the face have maintenance intervals of 10 times of the conventional exhaust valve of the welding deposit (stellite—SUH 3).

The invention is very preferable not only to exhaust valve for Diesel engine of ships and other vehicles but also other parts such as flame contacting walls of the Diesel engine. Further, the invention can be applied to combustion chambers of turbines, especially to heat insulating members using PSZ.

According to the invention, it is possible to provide components for engines which are not caused with crackings in the sintered ceramics due to thermal stress at cooling after bonding or during operation, whereby it is possible to practise the exhaust valve bonded with the sintered ceramics in the face of the Diesel engine, so that dock-to-dock maintenance free desired in this business world could be realized.

5

|   | Materials of face parts | Materials of base material | Maintenance intervals |
|---|---|---|---|
| 1 | NS · SiC | Nomonic 80A | 10,500 hr |
| 2 | NS · $Si_3N_4$ | " | 16,100 hr |
| 3 | RS · SiC | " | 9,000 hr |
| 4 | NS · PSZ | " | 14,400 hr |
| 5 | Stellite | SUH 3 | 1,500 hr |

**Claims**

1. Components for engines, composed of, in the order from an uppermost sintered ceramic material (2) on a base material (1), a bonding insert metal (3) and in insert material (4) for moderating thermal stress, which is composed mainly of low thermal expansion material, characterized in that said bonding insert metal (3) comprises an active metal being composed of one or more than two of Ti, Ti alloys, Al, Al alloys, Cu, Cu alloys, Ag, Ag alloys, except Cu as a bonding insert metal, and said low thermal expansion material being composed of one or both of a low thermal expansion metal having thermal coefficient of not more than $0.8 \times 10^{-6}/°C$ and a ceramics.

2. Components for engines as claimed in claim 1, wherein the insert material (4) comprises a plurality of layers including a low thermal expansion material and a soft metal material.

3. Components for engines as claimed in claim 1, wherein the insert material (4) includes a bonding metal comprising an active metal in an intermediate layer thereof.

4. Components for engines as claimed in claim 1, wherein the insert material (4) and the bonding insert metal (3) wrap other materials in upper layers excepting surfaces of said other materials.

5. Method for producing components of claim 1, characterized by laminating, on a base material (1), an insert material (4) for moderating thermal stress, which is composed of one or both of a low thermal expansion metal having thermal coefficient of not more than $0.8 \times 10^{-6}/°C$ and a ceramics, a bonding insert metal (3) comprising an active metal being composed of one or more than two of Ti, Ti alloys, Al, Al alloys, Cu, Cu alloys, Ag, Ag alloys, except Cu as a single bonding insert metal, and a sintered ceramic material (2), heating them in a vacuum or an inert gas atmosphere while applying a load on them from the upper part of the sintered ceramics for providing diffusion bonding therebetween.

6. Method for producing components for engines as claimed in claim 5, wherein said lamination is carried out by heating part or whole of the insert material (4) and the bonding insert metal (3), and subsequently by, if an insert material remains, interposing the remaining material on the base material, heating the materials in a vacuum or an inert gas atmosphere, while applying the load from the upper part of the sintered ceramics (2) for providing the diffusion bonding therebetween.

**Patentansprüche**

1. Bauteile für Maschinen, zusammengesetzt aus der Reihe nach von einem obersten gesinterten keramischen Material (2) auf einem Grundmaterial (1), einem Bindeeinsatzmetall (3) und einem Einsatzmaterial (4) zum Abschwächen thermischer Beanspruchungen, das hauptsächlich aus einem Material mit niedriger thermischer Expansion zusammengesetzt ist, dadurch gekennzeichnet, daß das Bindeeinsatzmetall (3) ein aktives Metall umfaßt, das aus einem oder mehr als zwei von Ti, Ti-Legierungen, Al, Al-Legierungen, Cu, Cu-Legierungen, Ag, Ag-Legierungen, ausgenommen Cu als Bindeeinsatzmetall, zusammengesetzt ist, und daß das Material mit niedriger thermischer Expansion zusammengesetzt ist aus einem Metall mit niedriger thermischer Expansion, das einen thermischen Koeffizienten von nicht mehr als $0.8 \times 10^{-6}/°C$ aufweist, und/oder keramischem Material.

2. Bauteile für Maschinen nach Anspruch 1, wobei das Einsatzmaterial (4) eine Anzahl von Schichten einschließlich ein Material mit geringer thermischer Expansion und ein weiches Metallmaterial umfaßt.

3. Bauteile für Maschinen nach Anspruch 1, wobei das Einsatzmaterial (4) ein Bindemetall umfaßt, das ein aktives Metall in einer Zwischenschicht aufweist.

4. Bauteile für Maschinen nach Anspruch 1, wobei das Einsatzmaterial (4) und das Bindeeinsatzmetall (3) andere Materialien in oberen Schichten umhüllen, ausgenommen die Oberflächen dieser anderen Materialien.

5. Verfahren zum Herstellen von Bauteilen nach Anspruch 1, dadurch gekennzeichnet, daß auf einem Grundmaterial (1) eine Lage eines Einsatzmaterials (4) zum Abschwächen thermischer Beanspruchungen aufgebracht wird, das aus einem Metall mit niedriger thermischer Expansion, das einen thermischen Koeffizienten von nicht mehr als $0.8 \times 10^{-6}/°C$ aufweist, und/oder aus keramischen Material zusammengesetzt ist, ferner eine Lage eines Bindeeinsatzmetalls (3) aufgebracht wird, das ein aktives Metall umfaßt, das zusammengesetzt ist aus einem oder mehr als zwei von Ti, Ti-Legierungen, Al, Al-Legierungen, Cu, Cu-Legierungen, Ag, Ag-Legierungen, ausgenommen Cu als einzelnes Bindeeinsatzmetall, und schließlich eine Lage eines gesinterten keramischen Materials (2) aufgebracht wird, wobei in Vakuum oder in einer

**EP 0 204 276 B1**

Inertgasatmosphäre aufgeheizt wird, während eine Last auf die Anordnung vom oberen Teil des gesinterten keramischen Materials aufgebracht wird, um eine Diffusionsbindung dazwischen zu erreichen.

6. Verfahren zum Herstellen von Bauteilen für Maschinen nach Anspruch 5, wobei das Aufbringen von Lagen ausgeführt wird durch Beheizen eines Teils oder des ganzen Einsatzmaterials (4) und des Bindeeinsatzmetalls (3) und anschließend, wenn ein Einsatzmaterial verbleibt, durch Anordnung des verbleibenden Materials auf dem Grundmaterial, wobei die Materialien in Vakuum oder in einer Inertgasatmosphäre beheizt werden, während eine Last vom oberen Teil des gesinterten keramischen Materials (2) aufgebracht wird, um eine Diffusionsbindung dazwischen zu erzielen.

## Revendications

1. Pièces pour moteurs à combustion constituées par, dans l'ordre à partir d'une matière céramique frittée supérieure (2) sur une matière de base (1), un métal d'insertion de liaison (3) et une matière d'insertion (4) pour atténuer les contraintes thermiques, qui est constituée principalement de matière à faible coefficient de dilatation thermique, caractérisées en ce que le métal d'insertion de liaison (3) comprend un métal actif constitué par un ou plus de deux composants choisis parmi Ti, alliages de Ti, Al, alliages d'Al, Cu, alliages de Cu, Ag, alliages d'Ag, à l'exception du Cu en tant que métal d'insertion de liaison unique, la matière à faible coefficient de dilatation thermique étant constituée par l'un ou les deux d'un métal à faible coefficient de dilatation thermique ayant un coefficient de dilatation thermique non supérieur à $0,8 \times 10^{-6}$/°C et une céramique.

2. Pièces pour moteurs à combustion selon la revendication 1, dans lesquelles la matière d'insertion (4) comprend plusieurs couches incluant une matière à faible coefficient de dilatation thermique et une matière de métal doux.

3. Pièces pour moteurs à combustion selon la revendication 1, dans lesquelles la matières d'insertion (4) comprend un métal de liaison comprenant un métal actif dans une couche intermédiaire de celui-ci.

4. Pièces pour moteurs à combustion selon la revendication 1, dans lesquelles la matière d'insertion (4) et le métal d'insertion de liaison (3) enveloppent d'autres matières dans des couches supérieures excluant les surfaces de ces autres matières.

5. Procédé pour la production de pièces selon la revendication 1, caractérisé par la stratification, sur une matière de base (1), d'une matière d'insertion (4) pour atténuer les contraintes thermiques, constituée par un ou les deux d'un métal à faible coefficient de dilatation thermique ayant un coefficient de dilatation thermique non supérieur à $0,8 \times 10^{-6}$/°C et une céramique, d'un métal d'insertion de liaison (3) comprenant un métal actif composé par un ou plus de deux composants choisis parmi T, alliages de Ti, Al, alliages d'Al, Cu, alliages de Cu, Ag, alliages d'Ag, à l'exception du Cu en tant que métal d'insertion de liaison unique, et une matière céramique frittée (2), en les chauffant sous vide ou dans une atmosphère de gaz inerte tout en appliquant une charge sur ceux-ci depuis la partie supérieure de la céramique frittée pour assurer un soudage par diffusion entre eux.

6. Procédé pour produire des pièces pour moteurs à combustion selon la revendication 5, dans lequel la stratification est effectuée en chauffant une partie ou la totalité de la matière d'insertion (4) et le métal d'insertion de liaison (3), et subséquemment, s'il reste de la matière d'insertion, en intercalant la matière restante sur la matière de base, tout en chauffant les matières sous vide ou dans une atmosphère de gaz inerte, en appliquant la charge depuis la partie supérieure de la céramique frittée (2) pour assurer le soudage par diffusion entre eux.

## FIG_1

## FIG_3

## FIG_4

Bonding process

Heating process

Cooling process

Temperature

Bonding stress

Temperature , Bonding stress

Time

## FIG_5

# FIG_2

(A)  (B)  (C)  (D)  (E)  (F)

$\sigma_s = 61.0 \, kgf/mm^2$  $\sigma_s = 42.2 \, kgf/mm^2$  $\sigma_s = 28.3 \, kgf/mm^2$  $\sigma_s = 23.3 \, kgf/mm^2$  $\sigma_s = 22.9 \, kgf/mm^2$  $\sigma_s = 20.4 \, kgf/mm^2$

EP 0 204 276 B1